# EUROPEAN PATENT APPLICATION

(11) **EP 1 445 751 A1**
(43) Date of publication of application: **11.08.2004**
(21) Application number: 03771431.8
(22) Date of filing: 30.07.2003
(51) Int. Cl.: G09F 13/18

(54) **LIGHT REFLECTION DISPLAY METHOD, LIGHT REFLECTION DISPLAY DEVICE, AND ELECTRONIC APPARATUS**

(30) Priority: 30.07.2002 JP 2002221126
(71) Applicant: Sony Corporation, Tokyo 141-0001 (JP)
(72) Inventor: Niitsu, Takuya, Sony Corporation, Shinagawa-ku, Tokyo 141-0001 (JP); Takahashi, Hitoshi, Sony Corporation, Shinagawa-ku, Tokyo 141-0001 (JP); Sakata, Tatsuya, Sony Corporation, Shinagawa-ku, Tokyo 141-0001 (JP); Noguchi, Masamoto, Sony Corporation, Shinagawa-ku, Tokyo 141-0001 (JP)
(74) Representative: Mills, Julia
(86) International application number: PCT/JP2003/009679
(87) International publication number: WO 2004/012174

(57) **Abstract**

A light reflex display method is provided, in which light emitted from a light emitting portion is reflected by a light transmissive member to be displayed on the outside thereof, when the light emitting portion cannot be provided directly to the light transmissive member.

Light L emitted from a light emitting portion 30 enters a light transmissive member 20 in the shape of a flat panel having light transmissivity from the side surface 31 thereof; light L is reflected by a light reflective portion 40 formed on one surface of the light transmissive member 20; and light L1 is emitted from the other surface of the light transmissive member 20 to the outside for display.

## Description

### TECHNICAL FIELD

The present invention relates to a light reflex display method, a light reflex display apparatus, and electronic equipment, in which light emitted from a light emitting portion enters a light transmissive member from the side surface thereof to be displayed on the outside of the light transmissive member by means of a light reflective portion.

### BACKGROUND ART

As an example of the electronic equipment, a picture display apparatus is, for example, provided. As an example of the picture display apparatus, a plasma display apparatus having a plasma display panel (PDP) for displaying a picture has attracted attention, for example. A front panel of this type of the picture display apparatus is transparent, and it is desired to provide a light emitting portion for displaying a predetermined function in this transparent front panel. For example, with emission of green light on the front panel, the state ON of power may be displayed for an observer.

### DISCLOSURE OF THE INVENTION

However, when the light emitting portion such as a light emitting diode is disposed on the inside of such transparent front panel, the light emitting diode is inevitably seen through the transparent front panel by the observer. In order for the light emitting diode not to be seen through the transparent front panel, it is conceivable that opaque tape or the like may be attached to a portion of the front panel, which corresponds to the position of the light emitting diode; however, in that case there exists an opaque portion on a part of the transparent front panel, thereby causing a problem of appearance and design of the electronic equipment being unattractive.

Therefore, the object of the present invention is to solve the above described problem and to provide a light reflex display method, a light reflex display apparatus, and electronic equipment including the light reflex display apparatus, in which in a light transmissive member that is unable to be directly provided with a light emitting portion, light emitted from the light emitting portion is reflected and displayed on the outside of the light transmissive member as if the light were emitted from the light emitting portion provided within the light transmissive member.

An aspect of the present invention is a light reflex display method, in which light emitted from a light emitting portion enters a light transmissive member in the shape of a flat panel having light transmissivity from the side surface thereof and is reflected by a light reflective portion formed on one surface of the light transmissive member to be emitted from the other surface of the light transmissive member to the outside.

According to the aspect of the present invention, the light emitted from the light emitting portion enter s the light transmissive member in the shape of a flat panel having light transmissivity from the side surface thereof. The entered light is reflected by the light reflective portion formed on one surface of the light transmissive member, and the reflected light can be emitted to the outside from the other surface of the light transmissive member and displayed.

Accordingly, even if the light emitting portion is provided at the other part than the rear side of the light transmissive member, that is, provided at a portion different from the light transmissive member, light emitted from the light emitting portion is reflected on the light transmissive member, so that an observer may perceive that light is emitted from the light reflective portion in the light transmissive member. With displaying that light, the observer can recognize a certain kind of function by his/her own eyes.

Further, in the above-described light reflex display method according to the present invention, the light transmissive member is a transparent resin panel.

Further, in the above-described light reflex display method according to the present invention, the light emitting portion is a light emitting diode.

In the present invention, the light emitting diode is employed as a light emitting portion, so that the light emitting portion can be small-sized and the costs can be reduced.

In the above-described light reflex display method according to the present invention, the light reflective portion is a recess formed on one surface of the light transmissive member.

According to the aspect of the present invention, light emitted from the light emitting portion is reflected by the recess constituting the light reflective portion, and the reflected light can be emitted to the outside from the other surface of the light transmissive member and displayed.

Further, in the above-described light reflex display method according to the present invention, a light dispersive portion that disperses the light is formed in the recess.

According to the aspect of the present invention, since light is dispersed by the light dispersive portion in the light reflective portion, the dispersed light can be displayed in the state of being dispersed from the other surface of the light transmissive member to the outside.

Further, in the above-described light reflex display method according to the present invention, the recess has a hemi-spherical surface.

Further, in the above-described light reflex display method according to the present invention, the recess has an inclined surface.

Further, in the above-described light reflex display method according to the present invention, the recess has a part of a cylindrical surface.

Another aspect of the present invention is a light reflex display apparatus including: a light transmissive member in the shape of a flat panel having light transmissivity and a light emitting portion for emitting light to enter the light transmissive member from the side surface thereof, in which on one surface of the light transmissive member there is formed a light reflective portion for reflecting the light to be emitted to the outside from the other surface of the light transmissive member.

According to the aspect of the present invention, the light emitted from the light emitting portion enters the light transmissive member in the shape of a flat panel having light transmissivity from the side surface thereof. The entered light can be reflected by the light reflective portion formed on one surface of the light transmissive member, and the reflected light can be emitted to the outside from the other surface of the light transmissive member and displayed.

Accordingly, even if the light emitting portion is provided at the other part than the rear side of the light transmissive member, that is, provided at a portion different from the light transmissive member, light emitted from the light emitting portion is reflected by the light transmissive member, so that an observer may perceive that light is emitted from the light reflective portion in the light transmissive member. With displaying that light, the observer can recognize a certain kind of function by his/her own eyes.

Further, in the above-described light reflex display apparatus according to the present invention, the light transmissive member is a transparent resin panel.

Further, in the above-described light reflex display apparatus according to the present invention, the light emitting portion is a light emitting diode.

In the present invention, the light emitting diode is employed as a light emitting portion, so that the light emitting portion can be small-sized and the costs can be reduced.

Further, in the above-described light reflex display apparatus according to the present invention, the light reflective portion is a recess formed on one surface of the light transmissive member.

According to the aspect of the present invention, light emitted from the light emitting portion is reflected by the recess constituting the light reflective portion, and the reflected light can be emitted to the outside from the other surface of the light transmissive member and displayed.

Further, in the above-described light reflex display apparatus according to the present invention, a light dispersive portion that disperses the light is formed in the recess.

According to the aspect of the present invention, since light is dispersed by the light dispersive portion in the light reflective portion, the dispersed light can be displayed in the state of being dispersed from the other surface of the light transmissive member to the outside.

Further, in the above-described light reflex display apparatus according to the present invention, the recess has a hemi-spherical surface.

Further, in the above-described light reflex display apparatus according to the present invention, the recess has an inclined surface.

Further, in the above-described light reflex display apparatus according to the present invention, the recess has a part of a cylindrical surface.

Further aspect of the present invention is electronic equipment including: a display surface for displaying a picture and a light reflex display apparatus provided on this display surface to reflect and display light; wherein the light reflex display apparatus includes a light transmissive member in the shape of a flat panel having light transmissivity and a light emitting portion for emitting light to enter the light transmissive member from the side surface thereof, in which on one surface of the light transmissive member there is formed a light reflective portion for reflecting the light to be emitted to the outside from the other surface of the light transmissive member.

According to the aspect of the present invention, the light emitted from the light emitting portion enters the light transmissive member in the shape of a flat panel having light transmissivity from the side surface thereof. The entered light can be reflected by the light reflective portion formed on one surface of the light transmissive member to be emitted from the other surface of the light emitting member to the outside.

Accordingly, even if the light emitting portion is provided at the other part than the rear side of the light transmissive member, that is, provided at a portion different from the light transmissive member, light emitted from the light emitting portion is reflected on the light transmissive member, so that the observer may perceive that light is emitted from the light reflective portion in the light transmissive member. With displaying that light, an observer can recognize a certain kind of function by his/her own eyes.

Further, in the above-described electronic equipment according to the present invention, the light transmissive member is a transparent resin panel.

Further, in the above-described electronic equipment according to the present invention, the light emitting portion is a light emitting diode.

In the present invention, the light emitting diode is employed as a light emitting portion, so that the light emitting portion can be small-sized and the costs can be reduced.

In the above-described electronic equipment according to the present invention, the light reflective portion is a recess formed on one surface of the light transmissive member.

According to the aspect of the present invention, light emitted from the light emitting portion is reflected by the recess constituting the light reflective portion, and the reflected light can be emitted to the outside from the other surface of the light transmissive member and displayed.

Further, in the above-described electronic equipment according to the present invention, a light dispersive portion that disperses the light is formed in the recess.

According to the aspect of the present invention, since light is dispersed by the light dispersive portion in the light reflective portion, the dispersed light can be displayed in the state of being dispersed to the outside from the other surface of the light transmissive member.

Further, in the above-described electronic equipment according to the present invention, the recess has a hemi-spherical surface.

Further, in the above-described electronic equipment according to the present invention, the recess has an inclined surface.

Further, in the above-described electronic equipment according to the present invention, the recess has a part of a cylindrical surface.

Further, in the above-described electronic equipment according to the present invention, the above electronic equipment is a plasma display and the above light transmissive member is a front panel of the plasma display.

Further, in the above-described electronic equipment according to the present invention, the above electronic equipment is a plasma display and the above light transmissive member is disposed on the inside of the front glass of the plasma display.

Further, in the above-described electronic equipment according to the present invention, the above electronic equipment is a plasma display having a member for covering the light emitting portion so that the light emitting portion may not be seen by an observer.

According to the aspect of the present invention, by means of the covering member, existence of the light emitting portion can reliably be concealed from an observer.

Further, in the above-described electronic equipment according to the present invention, the above electronic equipment is a plasma display and has a light directivity exerting member for making the light emitted from the light emitting portion exert directivity to be directed toward the side of the light reflective portion.

According to the aspect of the present invention, the light directivity exerting member in the light emitting portion can reliably direct light from the light emitting portion, so that light emitted from the light emitting portion can be prevented from leaking to the outside as much as possible.

Further, the above-described electronic equipment according to the present invention has a light leakage preventing portion that prevents leakage of light remaining after light from the light emitting portion is reflected by the light reflective portion.

According to the aspect of the present invention, remaining light having not reflected by the light reflective portion can be prevented from leaking from the light transmissive member by means of the light leakage preventing portion, so that the electronic equipment may have excellent appearance and design without the remaining light interfering with light that reflects on the light reflective portion to be displayed.

### BRIEF DESCRIPTION OF DRAWINGS

FIG. 1 is a perspective view showing an embodiment of electronic equipment having a light reflex display apparatus according to the present invention;
FIG. 2 is a cross-sectional view showing an example of a cross sectional structure taken by an E-E line of the electronic equipment of FIG. 1;
FIG. 3 is an enlarged view of FIG. 2, showing a part including a light emitting portion, a light reflective portion and other portions;
FIGS. 4A and 4B are a cross-sectional view and a front view, respectively showing the part including the light emitting portion, the light reflective portion and other portions of FIG. 2;
FIGS. 5A and 5B are views showing another embodiment of the light reflex display apparatus according to the present invention;
FIGS. 6A to 6C are views for explaining an example of the shape of a light reflective portion of the light reflex display apparatus of FIG. 5.;
FIGS. 7A and 7B are views showing another embodiment of the light reflex display apparatus according to the present invention;
FIGS. 8A and 8B are views showing further another embodiment of the light reflex display apparatus according to the present invention;
FIGS. 9A and 9B are views showing further another embodiment of the light reflex display apparatus according to the present invention; and
FIGS. 10A and 10B are views showing further another embodiment of the light reflex display apparatus according to the present invention.

### BEST MODE FOR CARRYING OUT THE INVENTION

Referring to the accompanied drawings, embodiments of the present invention will hereinafter be described in detail.

Hereupon, since the following embodiments are specific examples suitable for use in the present invention, various limitations favorable in light of technology are provided; however, the present invention is not limited to those embodiments unless description to limit the present invention is particularly provided in the followings.

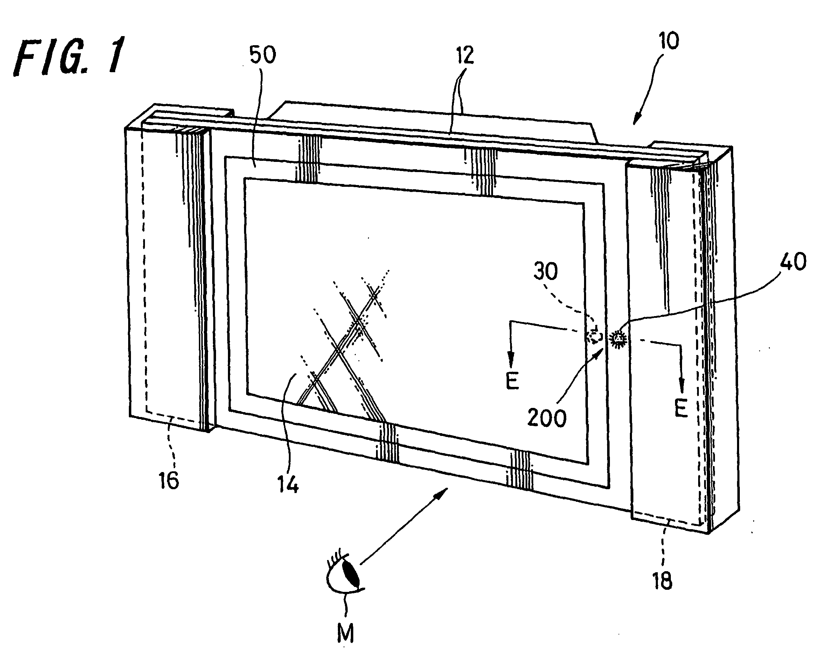

FIG. 1 shows an embodiment of the electronic apparatus according to the present invention.

Electronic equipment 10 is, for example, a plasma display apparatus having a plasma display panel (PDP) for displaying a picture. The plasma display panel is a display apparatus, for example, composed of two glasses between which gas such as helium, neon or the like is sealed to emit light when a voltage is applied thereto. Principles of light emission are the same as those of fluorescent light, but the plasma display panel has characteristics of higher contrast and a broader angle of field of view compared to other methods.

The electronic equipment 10 can be used as a large-sized wall mounted type television set.

The electronic equipment 10 includes: a chassis 12, a transparent front glass 14, speaker cabinets 16, 18, and a light reflex display apparatus 200. The speaker cabinets 16, 18 are provided at the positions on the left and right sides of the front glass 14, respectively. The chassis 12 secures the speaker cabinet 16, front glass 14, and speaker cabinet 18.

In a concave portion of the chassis 12, a display portion of the plasma display panel, a drive circuit and others are accommodated.

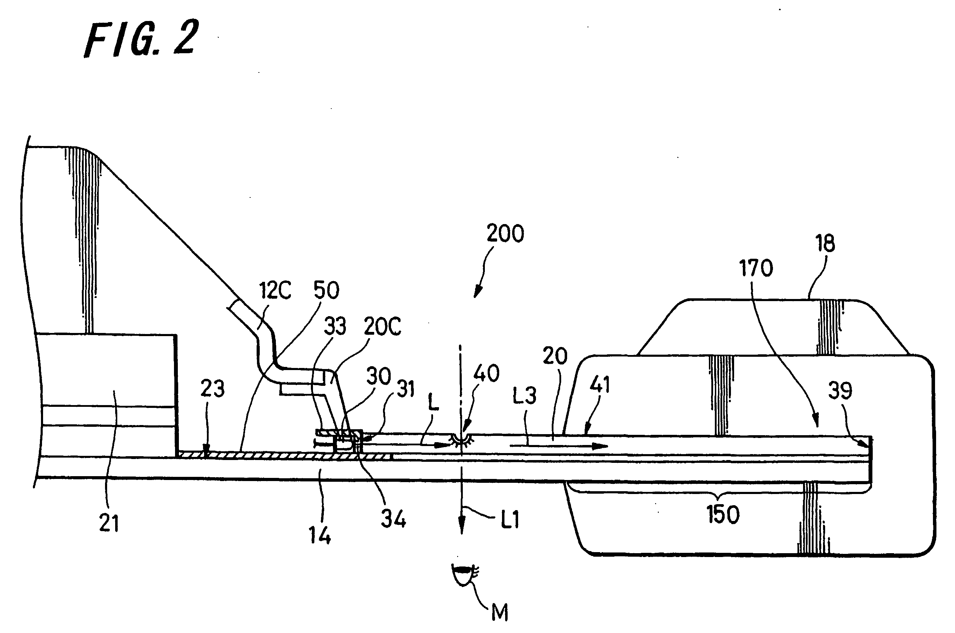

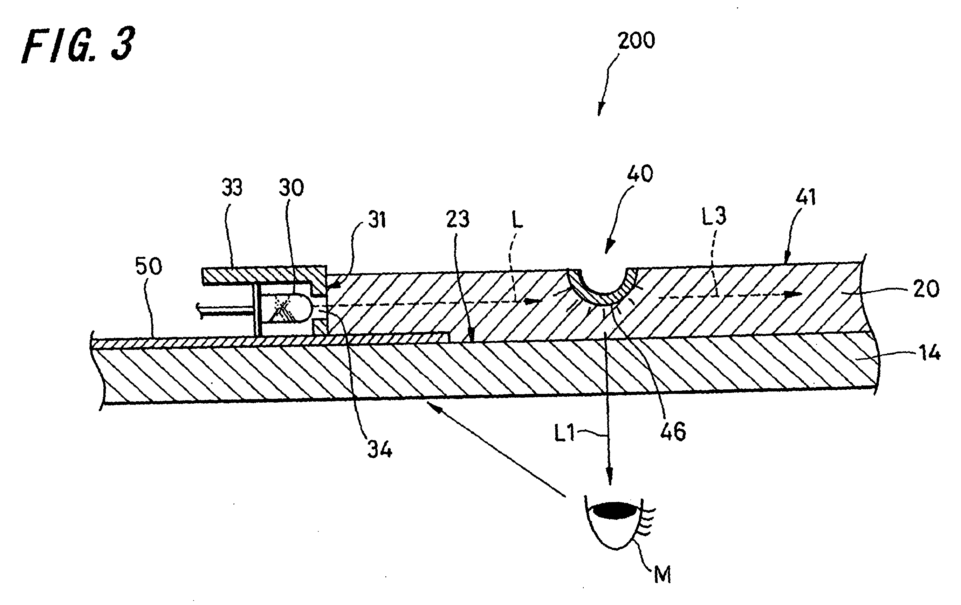

FIG. 2 shows an example of a cross-sectional structure of the light reflex display apparatus 200 of the electronic equipment 10 taken by the E-E line in FIG. 1. FIG. 3 shows an enlarged part in the vicinity of the light reflex display apparatus 200 of FIG. 2.

As shown in FIG. 2, on the inside of the front glass 14 a front panel 20 is arrayed substantially in contact with the front glass. The front glass 14 is made of a light transmissive member, for example, a transparent flat panel of glass. The inside front panel 20 is disposed substantially in contact with the outside front glass 14 overlapped in parallel. The inside front panel 20 is made of a light transmissive member in the shape of a flat panel having light transmissivity, and the inside front panel 20 is made of, for example, a transparent resin panel.

As the material for the front panel 20 of the light transmissive member, any one of transparent resin materials such as polycarbonate resin (PC), polymethylmethacrylate (PMMA), MS resin (methylmethacrylate styrene monomer copolymer), polypropylene (PP), transparent ABS (acrylonitrile-butadiene-styrene) resin, transparent polystyrene (PS), transparent epoxy resin, and other materials can be employed; however, other materials can be employed as well.

In the vicinity of the inside front panel 20 and the front glass 14, the speaker cabinet 18 is provided. Further, on the inside of the front glass 14 a plasma display portion 21 is provided in the chassis 12.

The inside front panel 20 in the shape of a flat panel having light transmissivity can be a glass panel other than the above-described transparent resin panel. A light transmissive member in the shape of a flat panel having light transmissivity in each embodiment of the present invention may be transparent, translucent, or may be tinted as a matter of course.

As shown in FIG. 2, an inside end portion 20C of the front panel 20 is coupled with an end portion 12C of the chassis 12.

As shown in FIGS. 2 and 3, on the side of an inner surface 23 of the front glass 14 a light emitting portion 30 is provided. As the light emitting portion 30, a light emitting diode (LED) can be employed, for example. Moreover, the light emitting portion 30 is disposed so as to oppose the side surface (also called end surface) 31 of the front panel 20. Accordingly, a light axis of the light emitting portion 30 is directed toward the side surface 31 and the direction of light axis of the light emitting 30 is parallel to the surface direction of the front panel 20. Light L emitted from the light emitting portion 30 enters the front panel 20 from the side surface 31 thereof and proceeds in the front panel 20 toward a light reflective portion 40.

The light emitting portion 30 is held by a light emitting portion holder 33. The light emitting portion holder 33 is fixed on the side of, for example, the plasma display portion 21 and has a hole 34. The hole 34 of the light emitting portion holder 33 is provided to make light emitted from the light emitting portion 30 direct to the side of the later described light reflective portion 40 in the front panel 20, that is, to make the light exert its directivity. Accordingly, the light emitting holder 33 corresponds to a light directivity exerting member.

The hole 34 is, for example, in circular shape and is provided opposing the side surface 31 of the front panel 20. The diameter of the hole 34 is approximately the same as that of the light emitting portion holder 33 or somewhat smaller than that.

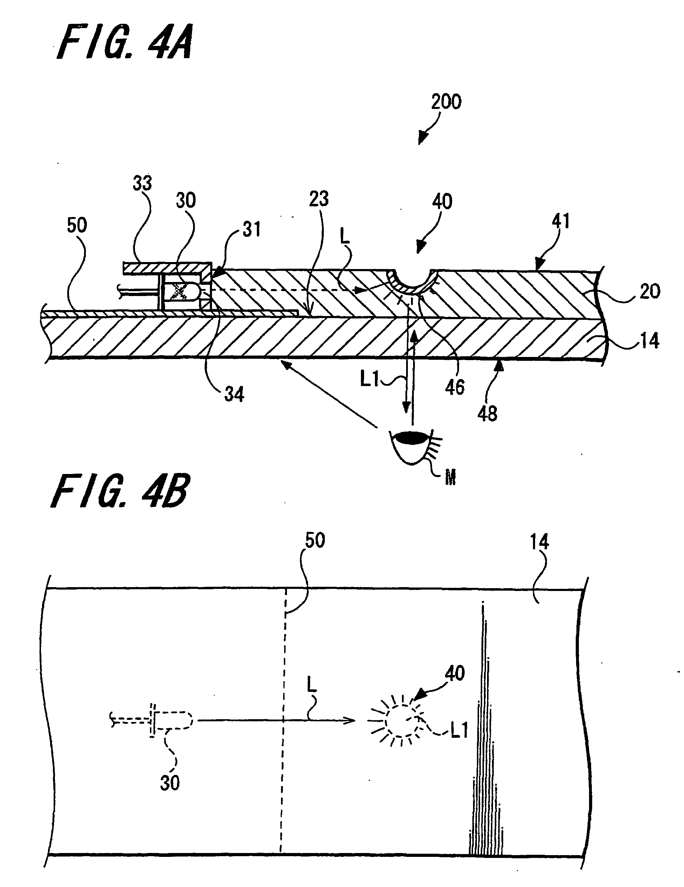

The light reflective portion 40 shown in FIGS. 3 and 4 is a recess formed on the side of an inner surface 41 of the front panel 20. The light reflective portion 40 is approximately a hemi-spherical recess. On the hemi-spherical surface of the light reflective portion 40, a satin-finished light dispersive portion 46 is formed. With providing the light dispersive portion 46, when as shown in FIG. 3 light L emitted from the light emitting portion 30 enters the front panel 20 from the side surface 31 thereof and reaches the light reflective portion 40 to reflect thereon, light L is dispersed to be emitted from the front panel 20 and the front glass 14 as light L1 to the side of an observer M.

As shown in FIG. 3, on the inside surface 23 of the front glass 14 a black coating portion 50 is formed as a cover member so that existence of the light emitting portion 30 is concealed from the observer M. Instead of forming the black coating portion 50, the cover member can be printed, adhesive tape can be attached, or another member made of metal or plastic can be attached.

According to the above construction, when the transparent front glass 14 and the transparent front panel 20 are employed, the observer M shall not directly view the light emitting portion 30, because the black coating portion 50 interferes, as shown in FIG. 4A, with the observer's view, so that outer appearance and design of the electronic equipment will be preferable.

In the embodiment described in FIGS. 2 through 4, the light reflective portion 40 provided on the inside front panel 20 is hemi-spherical, that is, semicircular in cross section, and for example such concave light reflective portion 40 is called a dimple-shaped portion.

In the above described embodiment, the black coating portion 50 is formed on the inside surface 23 of the outside front glass 14. However, an embodiment is not limited thereto and without question the black coating portion 50 can be formed on the side of an outer surface 48.

In FIG. 3, light L reflected by the light reflective portion 40 can be seen by an observer as if approximately semicircular light L were generated at the transparent front panel 20 and the front glass 14 as shown in FIG. 4B.

Color of the light emitted from the light emitting portion 30 shown in FIG. 3 is for example green, blue, red or the like.

For example, with green light emitted from the light emitting portion 30, light L1 can functionally display for an observer M the state in which power of the electronic equipment shown in FIG. 1 is ON.

With selecting blue as a color of light emitted from the light emitting portion 30, light L1 can functionally display for the observer M a picture turn-off mode (the state in which only sound is output without displaying a picture) in electronic equipment shown in, for example, FIG. 1.

With selecting red as a color of light emitted from the light emitting portion 30, light L1 can functionally display the state in which the electronic equipment shown in FIG. 1 is in a standby mode.

In the embodiment described in FIGS. 2 through 4, the depth of a recess constituting the light reflective portion 40 can be arbitrarily selected. Further, the dimensions of the light reflective portion 40 can be set arbitrarily.

As shown in FIG. 2, a part 150 of the front panel 20 and front glass 14 is held by a light leakage prevention portion 170 of the speaker cabinet 18 to be covered and secured. The light reflective portion 40 is provided at a position between the part 150 and the light emitting portion 30. After light L emitted from the light emitting portion 30 is reflected by the light reflective portion 40 and becomes light L1, remaining light L3 that has not been reflected proceeds along the surface direction of the front panel 20 and reaches the side surface 39 of the part 150.

With the light leakage prevention portion 170, light L3 can be prevented from leaking from the side surface 39 of the front panel 20 so that the observer' M may not perceive the leaking light L3, whereby light L1 reflected by the light reflective portion 40 may not be interfered by the leaking light L3 and outer appearance and design of the electronic equipment is improved.

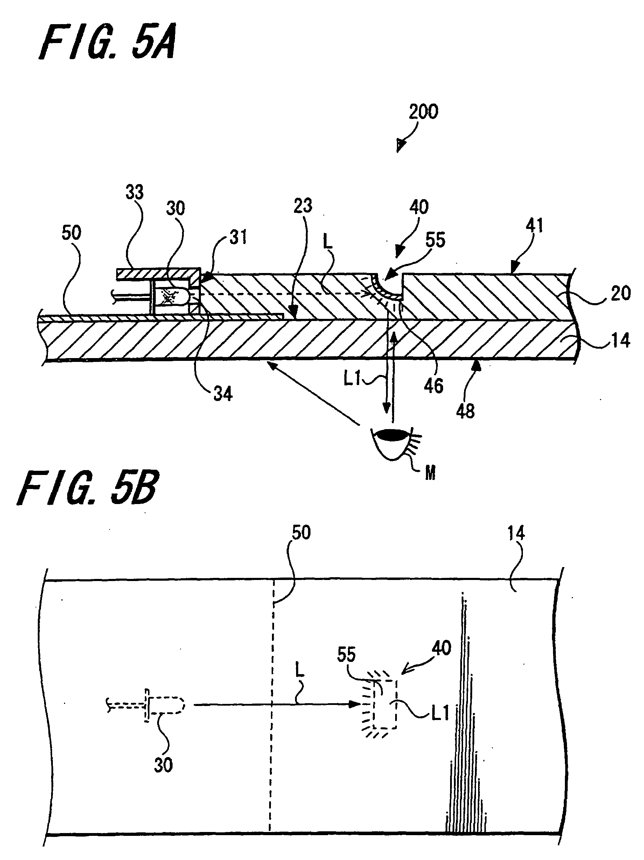

Next, referring to FIG. 5, another embodiment of the present invention is described.

In the embodiment shown in FIG. 5, the same numerals and symbols as those in the embodiment shown in FIGS. 2 through 4 are given to corresponding portions, and the explanation thereof is also employed.

The difference between the embodiment shown in FIG. 5 and the embodiment shown in FIGS. 2 through 4 is the shape of the light reflective portion 40. The light reflective portion 40 in FIG. 5 is a recess formed on the inside surface 41 of the inside front panel 20 and has the circular-arc cross section. On a circular-arc shaped portion 55 a light dispersive portion 46 having a satin-finished surface is formed.

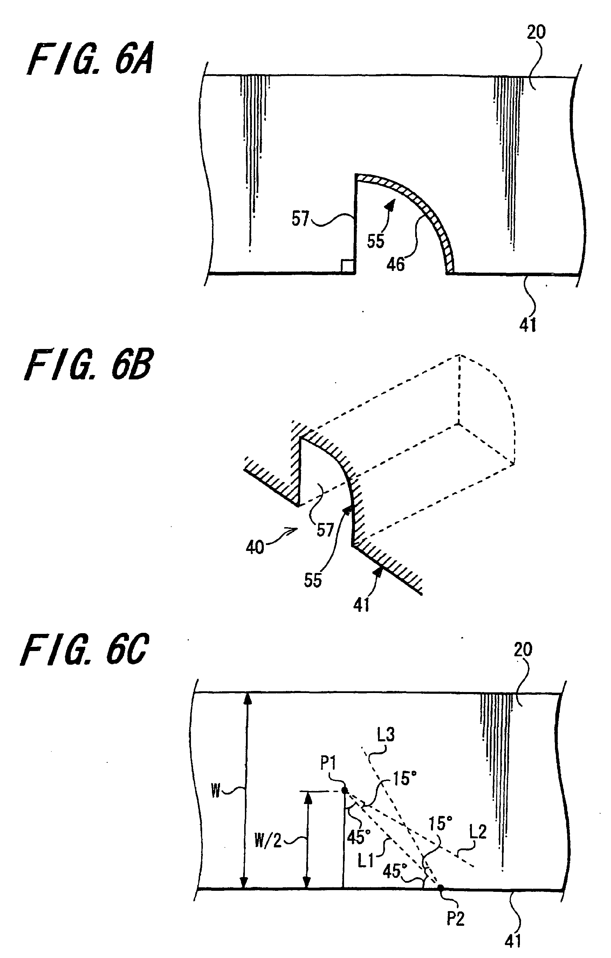

The shape in detail of the portion 55 having a circular-arc cross section is shown in FIGS. 6A and 6B. The portion 55 having a circular-arc cross section extends to a portion 57 having a vertical cross section. The vertical portion 57 is perpendicularly formed with respect to the flat inside surface 41 of the front panel 20. Accordingly, as shown in FIG. 6B, the light reflective portion 40 is a recess having a part of a cylindrical surface.

As a method for forming the portion 55 having a circular-arc cross section, the followings are conceivable. As shown in FIG. 6C, a point P1 is determined at half the depth of the front panel 20 and a line L1 is drawn at an angle of 45° from the point P1 to the inside surface 41. The line L1 is a straight line connecting the point P1 and a point P2. Another line L2 is drawn at an angle further inclined 15°, and a line L3 is drawn at an angle further inclined 15°. With drawing a circular arc from P1 to P2, to which the lines L2 and L3 are tangent, approximately the circular-arc portion 55 can be formed.

As shown in FIG. 5B, the observer M may perceive the rectangular light L1 as if the light were emitted from the light emitting portion existing on the spot.

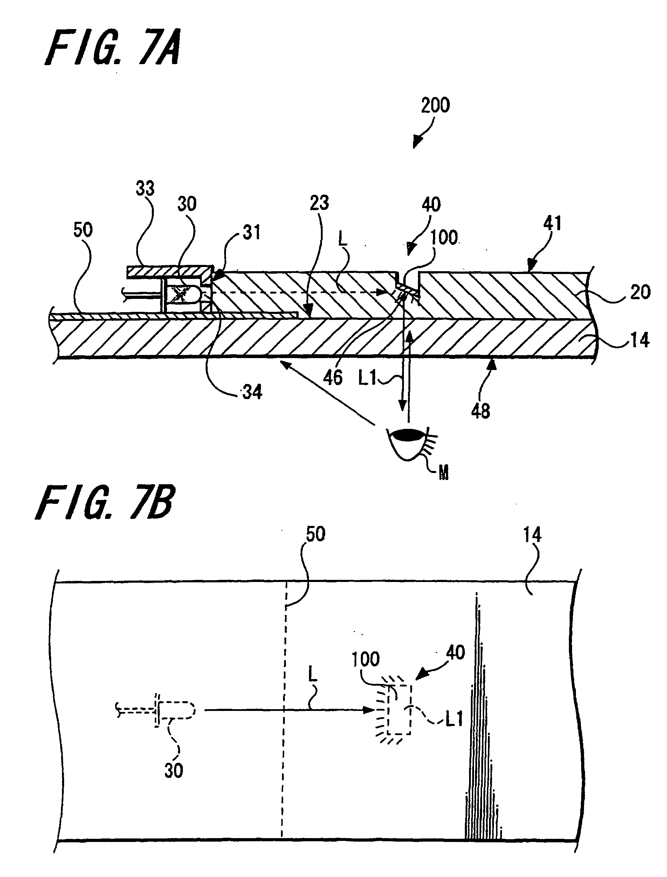

Next, referring to FIGS. 7A and 7B, further another embodiment of the present invention will be described.

In the embodiment shown in FIGS. 7A and 7B, the same numerals and symbols as those in the embodiment shown in FIGS. 4 are given to corresponding portions, and the explanation thereof is also employed.

The difference between the embodiment shown in FIG. 7 and the embodiment shown in FIG. 4 is the shape of the light reflective portion 40. The light reflective portion 40 in FIG. 7 has an inclined surface portion 100. Preferably, the light dispersive portion 46 is formed on the inclined surface portion 100. The inclined surface portion 100 is provided at the bottom of a recess formed on the inside surface 41 of the front panel 20. The angle of inclination of the inclined surface portion 100 is, for example, 45° with respect to the flat inside surface 41.

As shown in FIG. 7B, the observer M may perceive the rectangular light L1 as if the light were emitted from the light emitting portion existing on the spot.

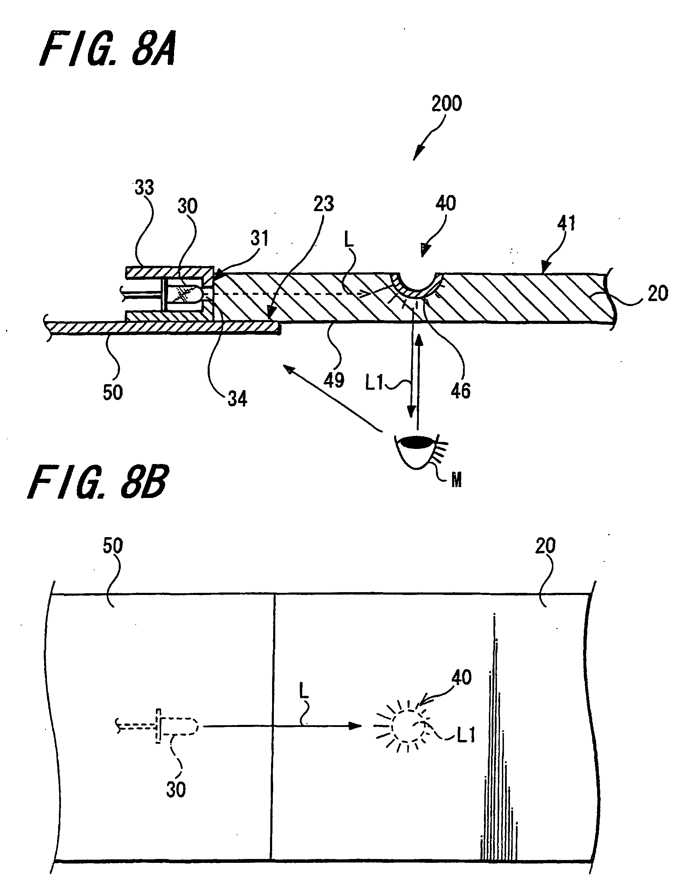

Each of FIGS. 8 through 10 shows further another embodiment of the present invention.

The embodiment shown in FIG. 8 has one front panel, which is different from the embodiment shown in FIG. 4 having two panels. Accordingly, one front panel 20 is employed and on the inside surface 41 of the front panel 20 a light reflective portion 40 in the shape of a recess is formed. The light reflective portion 40 has a hemi-spherical shape in which a light dispersive portion 46 is formed.

A black coating portion 50 is provided, for example, on the outside surface 49 of the front panel 20.

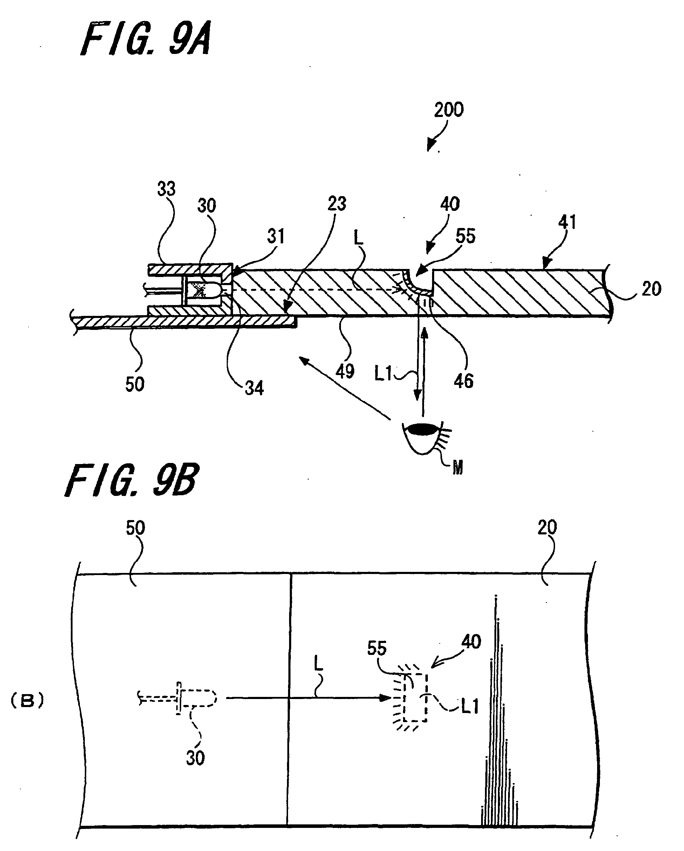

The difference between the embodiment shown in FIG. 9 and the embodiment shown in FIG. 8 is the shape of the light reflective portion 40. The shape of the light reflective portion 40 in FIG. 9 is the same as that shown in FIG. 5.

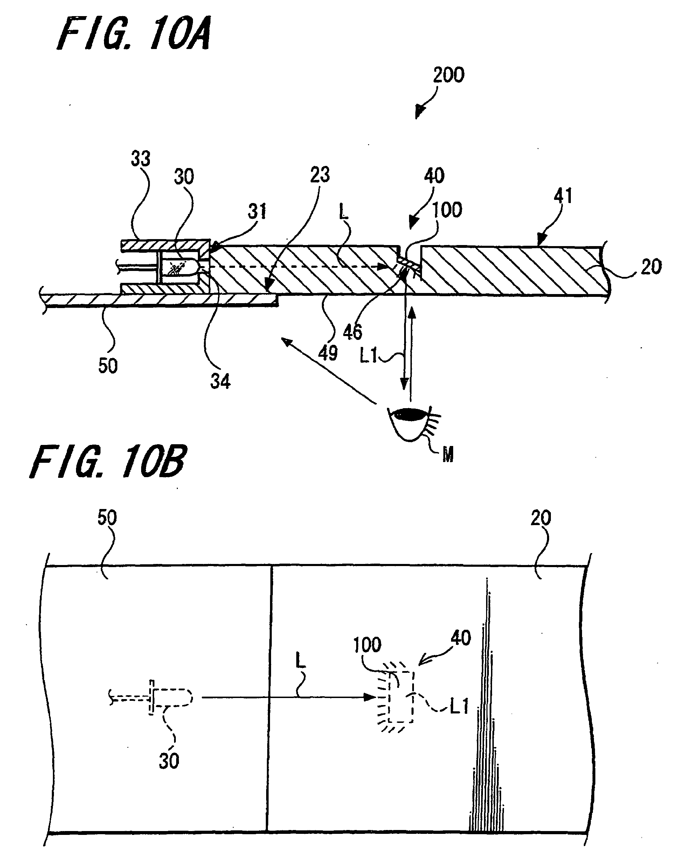

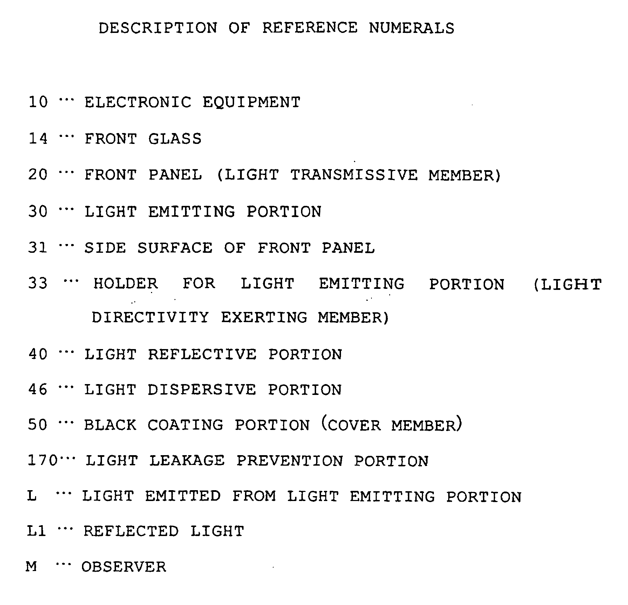

In the embodiment shown in FIG. 10, only one front panel 20 is employed similarly to the embodiments shown in FIGS. 8 and 9, while the shape of the light reflective portion 40 is different. The shape of the light reflective portion 40 shown in FIG. 10 is the same as that of the light reflective portion 40 shown in FIG. 7.

As described above, the electronic equipment 10 shown in FIG. 1 has the light reflex display apparatus 200 composed of the light reflective portion 40 in the front panel 20 and the light emitting portion 30. The light emitting portion 30 is disposed opposing the side surface (also called end surface) 31 of the front panel 20.

Light L emitted from the light emitting portion 30 is reflected by the light reflective portion 40, so that an observer M being on the outside of the front panel 20 may perceive the reflected light as if the light were emitted from a light emitting portion existing on the spot and were floating in midair. Accordingly, since light L entered as described above is reflected by the light reflective portion 40 and is dispersed by a light dispersive portion, the observer M may perceive that the light emitting portion 30 itself illuminates on the spot, when watching the reflected light L1. By selecting color of light emitted from the light emitting portion 30, color of light L1 reflected as shown in FIG. 2 can be varied. With color of the reflected light L1 set to green, red, blue or the like, light L1 having the selected color can display a predetermined function of the electronic equipment for the observer.

The shape of the light reflective portion 40 is not limited to the above-described dimple shape, inclined surface shape, or shape having a part of cylindrical surface, and other shapes can be employed without question. Further, as the light dispersive portion 46, for example, a satin-finished surface is formed on a portion having such cross section as semi-circular shape, inclined surface shape, or circular-arc shape of the light reflective portion 40; however, other surfaces than a satin-finished one can also be employed.

In the embodiments shown in the figures, the light reflective portion 40 is formed on the side of the inside surface 41 of the front panel 20, as shown in FIG. 2; however, the present invention is not limited thereto and without question the light reflective portion may be formed on the side of the outside surface of the front panel 20.

The front panel 20 constituting a light transmissive member can be formed of a transparent glass panel or a transparent resin panel. Further, such light transmissive member can be transparent and unpigmented materials, or if necessary, can be pigmented materials as a matter of course.

In the embodiments shown in the figures, a plasma display panel is employed as an example of electronic equipment according to the present invention. However, electronic equipment according to the present invention is not limited thereto, and various pieces of equipment requiring a front panel that is transparent or has light transmissivity, such as a display apparatus including a cathode-ray tube, a digital still camera, a digital video camera, a portable information terminal, a mobile phone unit, game equipment and other pieces of equipments are included as a matter of course.

## Claims

1. A light reflex display method, wherein light emitted from a light emitting portion enters a light transmissive member in the shape of a flat panel having light transmissivity from the side surface of said light transmissive member; said light is reflected by a light reflective portion formed on one surface of said light transmissive member; and said light is emitted from the other surface of said light transmissive member to the outside.

2. A light reflex display method according to claim 1, wherein said light transmissive member is a transparent resin panel.

3. A light reflex display method according to claim 1, wherein said light emitting portion is a light emitting diode.

4. A light reflex display method according to claim 2, wherein said light reflective portion is a recess formed on one surface of said light transmissive member.

5. A light reflex display method according to claim 4, wherein a light dispersive portion is formed in said recess.

6. A light reflex display method according to claim 4, wherein said recess has a hemi-spherical surface.

7. A light reflex display method according to claim 4, wherein said recess has an inclined surface.

8. A light reflex display method according to claim 4, wherein said recess has a part of a cylindrical surface.

9. A light reflex display apparatus comprising: a light transmissive member in the shape of a flat panel having light transmissivity and
a light emitting portion for emitting light to enter said light transmissive member from the side surface of said light transmissive member, wherein
on one surface of said light transmissive member a light reflective portion for reflecting said light to be emitted from the other surface of said light transmissive member is formed.

10. A light reflex display apparatus according to claim 9, wherein said light transmissive member is a transparent resin panel.

11. A light reflex display apparatus according to claim 9, wherein said light emitting portion is a light emitting diode.

12. A light reflex display apparatus according to claim 10, wherein said light reflective portion is a recess formed on one surface of said light transmissive member.

13. A light reflex display apparatus according to claim 12, wherein a light dispersive portion is formed in said recess.

14. A light reflex display apparatus according to claim 12, wherein said recess has a hemi-spherical surface.

15. A light reflex display apparatus according to claim 12, wherein said recess has an inclined surface.

16. A light reflex display apparatus according to claim 12, wherein said recess has a part of a cylindrical surface.

17. Electronic equipment having a display surface to display a picture and a light reflex display apparatus provided on said display surface to reflect light for display, wherein
said light reflex display apparatus comprises:
a light transmissive member in the shape of a flat panel having light transmissivity and
a light emitting portion for emitting light to enter said light transmissive member from the side surface of said light transmissive member; and
on one surface of said light transmissive member a light reflective portion for reflecting said light to be emitted from the other surface of said light transmissive member is formed.

18. Electronic equipment according to claim 17, wherein said light transmissive member is a transparent resin panel.

19. Electronic equipment according to claim 17, wherein said light emitting portion is a light emitting diode.

20. Electronic equipment according to claim 18, wherein said light reflective portion is a recess formed on one surface of said light transmissive member.

21. Electronic equipment according to claim 20, wherein a light dispersive portion is formed in said recess.

22. Electronic equipment according to claim 20, wherein said recess has a hemi-spherical surface.

23. Electronic equipment according to claim 20, wherein said recess has an inclined surface.

24. Electronic equipment according to claim 20, wherein said recess has a part of a cylindrical surface.

25. Electronic equipment according to claim 17, wherein said electronic equipment is a plasma display and said light transmissive member is a front panel of said plasma display.

26. Electronic equipment according to claim 17, wherein said electronic equipment is a plasma display and said light transmissive member is disposed on the inside of a front glass of said plasma display.

27. Electronic equipment according to claim 17, wherein said electronic equipment is a plasma display and has a member for covering said light emitting portion so that said light emitting portion cannot be seen from an observer.

28. Electronic equipment according to claim 17, wherein said electronic equipment is a plasma display and has a light directivity exerting member for making said light emitted from said light emitting portion exert directivity to be directed to the side of said light reflective portion.

29. Electronic equipment according to claim 17, further comprising a light leakage prevention portion for preventing the light remaining after said light emitted from said light emitting portion is reflected by said light reflection portion.
